# EUROPÄISCHE PATENTSCHRIFT

(11) **EP 2 628 366 B1**
(45) Veröffentlichungstag und Bekanntmachung des Hinweises auf die Patenterteilung: **01.10.2014**
(21) Anmeldenummer: 11769856.3
(22) Anmeldetag: 11.10.2011
(51) Int. Cl.: H05B 41/282, H05B 41/288, H05B 41/392

(54) **VERFAHREN UND ELEKTRISCHE SCHALTUNG ZUM BETRIEB EINER LICHTQUELLE EINES KRAFTFAHRZEUGSCHEINWERFERS MIT GLEICHSTROM, SOWIE LICHTMODUL EINES KRAFTFAHRZEUGSCHEINWERFERS MIT EINER SOLCHEN SCHALTUNG UND KRAFTFAHRZEUGSCHEINWERFER MIT EINEM SOLCHEN LICHTMODUL**
METHOD AND ELECTRICAL CIRCUIT FOR OPERATING A LIGHT SOURCE OF A MOTOR VEHICLE HEADLIGHT WITH DIRECT CURRENT, AND LIGHT MODULE OF A MOTOR VEHICLE HEADLIGHT COMPRISING SUCH A CIRCUIT AND MOTOR VEHICLE HEADLIGHT COMPRISING SUCH A LIGHT MODULE
PROCÉDÉ ET CIRCUIT ÉLECTRIQUE POUR FAIRE FONCTIONNER AU COURANT CONTINU UNE SOURCE LUMINEUSE D'UN PROJECTEUR DE VÉHICULE, MODULE LUMINEUX D'UN PROJECTEUR DE VÉHICULE COMPORTANT UN CIRCUIT DE CE TYPE ET PROJECTEUR DE VÉHICULE DOTÉ DE CE MODULE LUMINEUX

(30) Priorität: 15.10.2010 DE 102010048604
(43) Veröffentlichungstag der Anmeldung: 21.08.2013
(73) Patentinhaber: Automotive Lighting Reutlingen GmbH, 72762 Reutlingen (DE)
(72) Erfinder: LAUBENSTEIN, Rüdiger, 72760 Reutlingen (DE)
(74) Vertreter: DREISS Patentanwälte PartG mbB
(86) Internationale Anmeldenummer: PCT/EP2011/067694
(87) Internationale Veröffentlichungsnummer: WO 2012/049152

(56) Entgegenhaltungen:
- US-A1- 2006 197 470
- US-A1- 2009 051 300

## Beschreibung

Die vorliegende Erfindung betrifft ein Verfahren zum Betreiben einer an sich für den Betrieb mit einem Wechselstrom vorgesehenen Lichtquelle eines Kraftfahrzeugscheinwerfers mit einem Gleichstrom. Dabei weist die Lichtquelle eine induktive Last auf. Die Lichtquelle ist schaltungstechnisch zwischen Brückenzweigen einer elektrischen H-Brückenschaltung mit vier Halbleiterschaltern angeordnet. Im Wechselstrombetrieb wird die Lichtquelle über die H-Brückenschaltung mit dem Wechselstrom beaufschlagt. Dabei werden die beiden oben angeordneten (High-Side) Halbleiterschalter der H-Brückenschaltung jeweils über eine Bootstrap-Schaltung umfassend je mindestens einen Bootstrap-Kondensator angesteuert.

Die Erfindung betrifft auch eine elektrische Schaltung zum Betreiben einer an sich für den Betrieb mit einem Wechselstrom vorgesehenen Lichtquelle eines Kraftfahrzeugscheinwerfers mit einem Gleichstrom, wobei die Lichtquelle eine induktive Last aufweist. Die Schaltung umfasst:
- eine elektrische H-Brückenschaltung mit vier Halbleiterschaltern zum Beaufschlagen der Lichtquelle im Wechselstrombetrieb mit dem Wechselstrom, wobei die Lichtquelle schaltungstechnisch zwischen Brückenzweigen der H-Brückenschaltung angeordnet ist, und
- Bootstrap-Schaltungen mit je einem Bootstrap-Kondensator, die Bootstrap-Schaltungen jeweils zum Ansteuern von einem der beiden oben angeordneten Halbleiterschalter der H-Brückenschaltung.

Die Erfindung betrifft außerdem ein Lichtmodul eines Kraftfahrzeugscheinwerfers. Das Lichtmodul umfasst eine Lichtquelle mit induktiver Last sowie eine Schaltung zum Betrieb der Lichtquelle.

Schließlich betrifft die vorliegende Erfindung auch einen Kraftfahrzeugscheinwerfer, der ein Gehäuse mit einer durch eine transparente Abdeckscheibe verschlossenen Lichtaustrittsöffnung sowie mindestens ein in dem Gehäuse angeordnetes Lichtmodul umfasst.

Eine Gasentladungslampe (Gas Discharge Lamp, GDL) ist beispielsweise eine Lichtquelle mit einer induktiven Last. Die induktive Last ergibt sich aufgrund der induktiven Eigenschaften eines Hochspannungs-Zündübertragers zum Zünden und Betreiben der Gasentladungslampe. Gasentladungslampen werden in Lichtmodulen von Kraftfahrzeugscheinwerfern eingesetzt.

Das Lichtmodul mit der Gasentladungslampe kann als ein Reflexionsmodul ausgebildet sein, bei dem das von der Gasentladungslampe ausgesandte Licht durch einen Reflektor zur Erzeugung einer gewünschten Lichtverteilung auf der Fahrbahn vor dem Kraftfahrzeug reflektiert wird. Zur geringfügigen Variation der Lichtverteilung können im Strahlengang optisch wirksame Profile, beispielsweise in Form von Zylinderlinsen oder Prismen, vorgesehen sein. Die optischen Profile können auf einer Abdeckscheibe (Streuscheibe) des Kraftfahrzeugscheinwerfers ausgebildet sein, durch die das vom Reflektor reflektierte Licht beim Austritt aus dem Kraftfahrzeugscheinwerfer hindurchtritt. Falls die erzeugte Lichtverteilung eine abgeblendete Lichtverteilung mit einer im Wesentlichen horizontalen Helldunkelgrenze sein soll, kann die Form des Reflektors entsprechend gewählt werden, so dass das reflektierte und vom Scheinwerfer ausgesandte Licht bereits die gewünschte Helldunkelgrenze aufweist, ohne dass es dazu zusätzlicher Mittel zum Abschatten eines Teils der reflektierten Lichtstrahlen bedarf. Derartig geformte Reflektoren werden auch als Freiformreflektoren bezeichnet.

Alternativ kann das Lichtmodul mit der Gasentladungslampe auch als ein sogenanntes Projektionsmodul ausgebildet sein, bei dem das von der Gasentladungslampe ausgesandte Licht zunächst von einer Primäroptik (zum Beispiel einem Reflektor) gebündelt und dann von einer Sekundäroptik (zum Beispiel eine Projektionslinse) zur Erzeugung einer gewünschten Lichtverteilung auf der Fahrbahn vor dem Kraftfahrzeug abgebildet wird. Falls die erzeugte Lichtverteilung eine im Wesentlichen horizontale Helldunkelgrenze (z.B. zur Erzeugung einer abgeblendeten Lichtverteilung, wie bspw. Abblendlicht und Nebellicht) und/oder vertikale Helldunkelgrenze (z.B. zur Realisierung eines Teilfernlichts (andere Verkehrsteilnehmer vor dem Fahrzeug werden gezielt aus einer Fernlichtverteilung ausgeblendet) oder eines Markierungslichts (Objekte oder Personen vor dem Fahrzeug werden gezielt angestrahlt)) aufweisen soll, kann im Strahlengang zwischen der Primär- und der Sekundäroptik mindestens eine entsprechende Blendenanordnung angeordnet sein, die einen Teil der gebündelten Lichtstrahlen abschattet. Eine im Wesentlichen horizontal verlaufende Oberkante (zur Erzeugung der horizontalen Helldunkelgrenze) und/oder eine im Wesentlichen vertikal verlaufende seitliche Kante (zur Erzeugung der vertikalen Helldunkelgrenze) der Blendenanordnung wird durch die Sekundäroptik als Helldunkel-Übergang auf der Fahrbahn vor dem Fahrzeug abgebildet.

Zur Variation der von dem Projektionsmodul erzeugten Lichtverteilung kann die Blendenanordnung mehr oder weniger weit in den Strahlengang eingeführt werden. Auf diese Weise kann die erzeugte Lichtverteilung beispielsweise zwischen Abblendlicht und Fernlicht umgeschaltet werden oder die Position und/oder Erstreckung eines abgeschatteten Bereichs (beim Teilfernlicht) oder eines ausgeleuchteten Bereichs (beim Markierungslicht) verändert werden. Ferner kann es zur Variation der Lichtverteilung möglich sein, den Verlauf der abgebildeten Kanten der Blendenanordnung zu variieren. Es ist ferner denkbar, dass bspw. zwischen Abblendlicht und Fernlicht noch weitere Lichtverteilungen ausgewählt werden können, die durch Zwischenstellungen der Blendenanordnung zwischen der Stellung für Abblendlicht und der Stellung für Fernlicht und/oder durch eine Variation des Verlaufs der von der Sekundäroptik abgebildeten Kante der Blendenanord-nung definiert sind. Derartige weitere Lichtverteilungen sind beispielsweise eine Stadtlichtverteilung, eine Landstraßenlichtverteilung, eine Autobahnlichtverteilung, eine Regen-, Schnee- oder Schlechtwetterlichtverteilung oder ähnliche.

Gasentladungslampen werden normalerweise mit Wechselstrom betrieben, um unter anderem ein Überhitzen der Elektroden, zwischen denen der Lichtbogen erzeugt wird, und die damit verbundenen Konsequenzen bis hin zum Ausfall der Gasentladungs-lampe zu vermeiden. Gasentladungslampen können nur bedingt gedimmt werden, also mit einem reduzierten Strom betrieben werden, da bei kleinen Strömen die Elektroden abkühlen, wodurch deren Elektronenaustritts-arbeit steigt beziehungsweise die Emittierfähigkeit sinkt. Je kleiner der Strom ist, desto mehr Wiederzündspannung muss für die Stromrichtungsumkehr beim Betrieb mit Wechselstrom aufgebracht werden. Niedrige Ströme beziehungsweise Leistungen führen also zu Kommutierungs-problemen, die als Licht-Flackern sichtbar sind und sogar zum vollständigen Erlöschen des Lichtbogens führen können.

Es wäre denkbar, eine Ansteuerschaltung für Gasentladungslampen derart auszugestalten, dass ein Dimmen einer Gastentladungslampe im Wechselstrombetrieb möglich ist. Um ein zu starkes Abkühlen der Elektroden und die damit verbundenen Kommutierungsprobleme zu vermeiden, könnte die Ansteuerschaltung kurz vordem Umschalten die Leistung erhöhen, indem beispielsweise der Strom von dem für den Betrieb üblichen Wert (z.B. 600 mA) erhöht wird (z.B. auf etwa 1 A). Es handelt sich also um eine Leistungserhöhung im Bereich von etwa 50%. Dadurch könnten die Elektroden vor dem Umschalten erwärmt werden, so dass die Austrittsarbeit und damit die für das Umschalten erforderliche Spannung sinkt. Dies ist jedoch mit einem höheren Energieverbrauch sowie einer höheren Belastung der Ansteuerschaltung und der Gasentladungslampe und einer daraus resultierenden verringerten Lebensdauer aufgrund des intermittierenden Aufheizens der Elektroden verbunden.

Gasentladungslampen neuerer Bauart bieten aufgrund ihres speziellen Aufbaus die Möglichkeit, ab einer bestimmten unkritischen Elektrodentemperatur vom Wechselstrombetrieb in den Gleichstrombetrieb zu wechseln, ohne dabei die Lampe zu beschädigen. Dabei sind die Elektroden der Gasentladungslampe derart ausgebildet, dass sich während des Gleichstrombetriebs ein thermisches Gleichgewicht an einer Elektrode einstellt, das einerseits die Temperatur-erhöhung durch die an der Elektrode ankommenden Elektronen/Ionen und zum anderen eine Temperaturver-ringerung durch eine Wärmeabfuhr über das Material der Elektrode berücksichtigt. Im Gleichstrombetrieb sind erheblich geringere Leistungen möglich, ohne dass es zu dem genannten Licht-Flackern oder gar zum völligen Lichtbogen-Erlöschen aufgrund von Kommutierungsproblemen kommt.

Für den Wechselstrombetrieb der Gasentladungslampe wird in der Regel eine sogenannte H-Brückenschaltung verwendet, die vier steuerbare Halbleiterschaltelemente, vorzugsweise in Form von Transistoren, umfasst und die eine Zwischenkreis-Gleichspannung in eine rechteckförmige Wechselspannung umwandelt, indem ein Brückenzweig der H-Brückenschaltung, in dem die eine Seite der Last angeordnet ist, mit einer bestimmten Frequenz zwischen der positiven Versorgungs-spannung und Masse einerseits und der andere Brückenzweig, in dem die andere Seite der Last angeordnet ist, zwischen Masse und der positiven Versorgungsspannung andererseits umgeschaltet wird. Dabei ergibt sich die spannung über der Last als Differenz-Spannung der Brückenzweige, die dann zwischen positiver und negativer Zwischenkreis-Spannung hin- und herschaltet. Bei den aus dem Stand der Technik bekannten Schaltungen kann je nach Ausführung der Halbleiterschaltung und deren Ansteuer-elektronik ein dauerhafter Gleichstrom-betrieb nur mit einem mehr oder weniger großen Aufwand aufrechterhalten werden.

Bei Verwendung von n-Kanal-Mosfets beziehungsweise IGBTs als Highside-Schalter, bei denen das Drain mit der positiven Zwischenkreis-Spannung V+ (zum Beispiel V+=500V) verbunden ist, muss das Gate-Potential zur Ansteuerung mindestens um die Schwellspannung Uth (zum Beispiel Uth=2 bis 4 V) höher als das Source-Potential sein. Da Drain und Source im eingeschalteten Zustand (bei leitendem Halbleiterschalter) auf fast dem gleichen Potential liegen, muss dem Gate eine um mindestens die Schwellspannung Uth höhere Spannung Vg als die Zwischenkreis-Spannung V+ (zum Beispiel Vg=510 V) zur Verfügung gestellt werden. Dies wird nach dem Stand der Technik in der Regel mit einer sogenannten Bootstrap-Schaltung realisiert. Diese umfasst einen Gate-Treiber, der über einen Level-Shifter angesteuert wird und dessen Spannungsversorgung aus einem aufgeladenen Bootstrap-Kondensator besteht, dessen Fußpunkt am Source des Highside-Schalters (entspricht dem Drain des Lowside-Schalters und dem Ausgang Uout der H-Brückenschaltung) und dessen Gegenpol über eine Hochspannungs-Bootstrap-Diode an einer Versorgungsspannung Vs (zum Beispiel Vs=10 bis 12 V) liegt. Wenn der Lowside-Schalter angesteuert wird, liegt der Ausgang Uout der H-Brückenschaltung auf Masse und der Bootstrap-Kondensator kann sich über die Bootstrap-Diode auf etwa die Versorgungs-Spannung Vs aufladen. Wenn die Brückenschaltung umgeschaltet werden soll, wird der Lowside-Schalter abgeschaltet (unterbrochen) und anschließend der Highside-Schalter angesteuert (leitend). Dadurch wird die Ladung von dem Bootstrap-Kondensator über den Gate-Treiber zwischen Gate und Source des Highside-Schalters geschaltet, wodurch das Potential des Source (entspricht der Ausgangsspannung Uout der H-Brückenschaltung) auf die Zwischenkreis-Spannung V+ springt. Damit wird die gesamte Bootstrap-Schaltung im Potential auf die Zwischenkreis-Spannung V+ angehoben (geshiftet) und die Bootstrap-Diode sperrt, wobei die Gate-Spannung des Highside-Schalters um die Bootstrap-Spannung (etwa 10 bis 12 V) höher als die Zwischenkreis-Spannung V+ (etwa 500 V) liegt.

Durch Leckströme (Versorgung des Gate-Treibers + Sperrstrom der Bootstrap-Diode + Sperrstrom des Levelshifters) entlädt sich der Bootstrap-Kondensator, wodurch der Highside-Schalter bei Unterschreiten der Schwellspannung Uth ungewollt und selbständig wieder abschaltet. Dies bereitet beim Wechselstrombetrieb der Gasentladungslampe keine Probleme, führt jedoch zu einer deutlichen Beschränkung der Zeitdauer, während der die Gasentladungslampe in einem Gleichstrombetrieb betrieben werden kann. Die maximale Zeit, in der der Highside-Schalter kontinuierlich eingeschaltet bleiben kann, definiert sich aus der Kapazität des Bootstrap-Kondensators, den Leckströmen, der Versorgungsspannung Vs und der Schwellspannung Uth der Halbleiterspannung. Die maximale Zeitdauer ist aber auf jeden Fall zeitlich begrenzt, wodurch die minimale Arbeitsfrequenz des Wechselstrombetriebs festgelegt ist. Mit der beschriebenen, aus dem Stand der Technik bekannten Ansteuerschaltung ist also ein längerer oder gar ein unbegrenzter Gleichstrombetrieb der Gasentladungslampe nicht möglich.

Um trotzdem den Gleichstrombetrieb der Gasentladungslampe zu ermöglichen, muss die von dem Bootstrap-Kondensator abfließende Ladung nachgeführt werden. Dies wird nach dem Stand der Technik mit aufwendigen Hochspannungs-Pumpschaltungen (Levelshifter mit kapazitiven Ladungspumpen oder potentialfreien Übertragerwicklungen mit Gleichrichter) realisiert. So ist es zum Nachführen der aus dem Bootstrap-Kondensator abfließenden Ladung beispielsweise aus der DE 11 2007 000 465 T2 bekannt, eine zusätzliche Transformatorwicklung eines bereits verwendeten Niederspannungsübertragers, eine zusätzliche Hochspannungs-Diode (ausgelegt bspw. auf bis zu 600 V) mit besonders kleinen Leckströmen sowie eine zusätzliche, parallel zum Bootstrap-Kondensator geschaltete Zenerdiode zu verwenden. Mit Hilfe dieser zusätzlichen Schaltungselemente kann der Bootstrap-Kondensator während des Gleichstrombetriebs mit kurzzeitigen Strompulsen aufgeladen und so die abfließende Ladung nachgeführt werden. Die vorgeschlagenen Lösung hat jedoch den Nachteil, dass sie einen erheblichen zusätzlichen Aufwand bezüglich Energieverbrauch beziehungsweise hinsichtlich der zusätzlich erforderlichen Bauteile hat. Aus diesem Grund sind in der DE 11 2007 000 465 T2 die erforderlichen zusätzlichen Bauteile auch nur für eine Bootstrap-Schaltung vorgesehen. Das hat den Nachteil, dass ein Gleichstrom-Betrieb nur in einer Richtung möglich ist. Außerdem liegt die Transformatorwicklung auf dem Potential der Zwischenkreis-Spannung V+ (etwa 500 V) und muss somit gegenüber der Niederspannung des Niederspannungsübertragers aufwendig isoliert werden.

Ausgehend von dem beschriebenen Stand der Technik liegt der vorliegenden Erfindung die Aufgabe zugrunde, eine Dimmung beziehungsweise eine Leistungs-Abregelung von Gasentladungslampen im Gleichstrombetrieb trotz Einsatz einer Bootstrap-Ansteuerung ohne aufwendige zusätzliche Maßnahmen beziehungsweise Bauelemente zu ermöglichen.

Zur Lösung dieser Aufgabe wird ausgehend von dem Verfahren der eingangs genannten Art vorgeschlagen, dass im Gleichstrombetrieb von Zeit zu Zeit mindestens einer der geschlossenen Halbleiterschalter der H-Brückenschaltung für einen Nachladevorgang kurzzeitig abgeschaltet und am Ende des Nachladevorgangs wieder eingeschaltet wird, wobei der Nachladevorgang beendet wird, bevor der über den Brückenzweig der H-Brückenschaltung fließende Strom einen Wert von 0 Ampere erreicht.

Ein wesentlicher Aspekt der vorliegenden Erfindung ist es, den Bootstrap-Kondensator der Bootstrap-Ansteuerung durch pulsförmiges, zeitlich sehr kurzes Abschalten der H-Brückenschaltung nachzuladen, ohne dass die Lichtquelle dabei erlischt. Aufgrund der induktiven Last der Lichtquelle ändert sich bei einem kurzzeitigen Abschalten der H-Brückenschaltung der über den Brückenzweig der H-Brückenschaltung fließende Strom nicht abrupt, sondern relativ langsam, beispielsweise gemäß einer e-Funktion. Den Halbleiterschaltern der H-Brückenschaltung sind sogenannte Source-Drain-Body-Dioden parallel geschaltet, die nach dem Abschalten der Halbleiterschalter als Freilauf-Dioden arbeiten und so das Fließen eines Freilaufstroms über den Brückenzweig der H-Brückenschaltung ermöglichen, wodurch dieser Brückenzweig selbstständig von dem Potential her auf Masse kippt, was wiederum zu einem Aufladen des Bootstrap-Kondensators führt. Die Erfindung hat den Vorteil, dass zusätzliche Bauteile und deren aufwendige elektrische Integration in die bestehende Ansteuerschaltung, wie dies bspw. in der DE 11 2007 000 465 T2 erforderlich ist, eingespart werden kann. Zudem erlaubt die Erfindung ohne Zusatzaufwand einen Gleichstrom-Betrieb in beide Richtungen.

Im Wechselstrombetrieb der Gasentladungslampe wird bei jedem kurzzeitigen Umschaltvorgang (Kommutierungsvorgang) der H-Brückenschaltung die Ausgangsspannung Uout der H-Brückenschaltung auf die gleiche Größe (Zwischenkreisspannung V+), jedoch mit unterschiedlichen Vorzeichen umgepolt, indem die linke und die rechte Brückenseite jeweils von Masse nach der positiven Zwischenkreis-Spannung (+ V+) beziehungsweise von der positiven Zwischenkreis-Spannung (V+) nach Masse geschaltet wird. Dadurch sinkt der über den Brückenzweig fließende Lampenstrom aufgrund der induktiven Last e-Funktions-förmig mit einer festen Zeitkonstanten ab, erreicht nach einer gewissen Zeitdauer den Stromnulldurchgang, wechselt die Richtung und steigt betragsmäßig in die entgegengesetzte Richtung wieder an.

In dem Moment, in dem die eingeschalteten (leitenden) Halbleiterschalter der H-Brückenschaltung abgeschaltet (unterbrochen oder hochohmig) werden, treibt die Induktivität der induktiven Last der Lichtquelle den Lampenstrom in gleicher Richtung weiter, wodurch die Ausgangspotentiale der Brückenseiten selbständig kippen, indem die Ausgangskapazitäten aufgeladen beziehungsweise entladen werden bis die den Halbleiterschaltern parallel geschalteten Freilauf-Dioden den Strom übernehmen.

Die Brückenseite, die vorher auf der Zwischenkreis-Spannung V+ geschaltet war und deren Bootstrap-Kondensator während dieser Phase durch Leckströme Ladung verloren hat, wird durch das Abschalten des Highside-Schalters auf Masse kippen, wodurch dieser Bootstrap-Kondensator über die Bootstrap-Diode wieder aufgeladen werden kann.

Bei der vorliegenden Erfindung macht man sich diesen Effekt zunutze und ermöglicht so ein Aufladen des Bootstrap-Kondensators im Gleichstrombetrieb während einer relativ kurzen Zeitdauer, bevor der Lampenstrom den Stromnulldurchgang erreicht hat, das heißt ohne in den Wechselstrombetrieb zu wechseln. Damit besteht die Möglichkeit, nicht wie normalerweise im Wechselstrombetrieb in umgepolter Richtung wieder einzuschalten und den Strom komplett umzurichten, sondern in der ursprünglichen Richtung wieder einzuschalten und den Strom vor Erreichen des Nulldurchgangs in der ursprünglichen Richtung wieder ansteigen zu lassen. Es ergibt sich also ein Gleichstrombetrieb der Lichtquelle, wobei der Bootstrap-Kondensator der Bootstrap-Schaltung von Zeit zu Zeit aufgeladen wird, um die abfließende Ladung nachzuführen.

Mit der vorliegenden Erfindung ist es möglich, Lichtquellen mit induktiver Last, insbesondere Gasentladungslampen, bei Verwendung einer H-Brückenschaltung mit Bootstrap-Gate-Ansteuerungen der High-Side-Schalter der H-Brücke bei extrem niedrigen Leistungen beziehungsweise einer relativ starken Dimmung zu betreiben. Gleichzeitig wird der Zusatz-Aufwand für teuere zusätzliche Pumpschal-tungen vermieden. Auch eine Zusatzübertragung mit einer Hochspannungs-Transformatorwicklung und/oder Hochspannungs-dioden beziehungsweise Hochspannungstransistoren sind bei der vorliegenden Erfindung nicht erforderlich. Vielmehr wird zur Realisierung der vorliegenden Erfindung lediglich auf bereits vorhandene Komponenten der Ansteuerschaltung zurückgegriffen. Schließlich bietet die vorliegende Erfindung auch die Möglichkeit, die Kapazität des Bootstrap-Kondensators zu reduzieren und diesen kleiner als bisher zu bemessen, da er während des Gleichstrombetriebs von Zeit zu Zeit nachgeladen wird. Dadurch ergibt sich zum einen eine Platzersparnis auf der Platine aufgrund der kleineren Bauform des Bootstrap-Kondensators mit verringerter Kapazität und andererseits eine Kostenersparnis.

Das Nachladen des Bootstrap-Kondensators kann regelmäßig in bestimmten zeitlichen Abständen erfolgen. Das Nachladen kann aber auch unabhängig von der Zeit immer dann erfolgen, wenn die Spannung des Bootstrap-Kondensators einen vorgebbaren Schwellwert erreicht oder unterschritten hat. Der Schwellwert ist vorzugsweise so definiert, dass die im Kondensator noch vorhandene Spannung auf jeden Fall ausreicht, den oder die Halbleiterschalter der H-Brücke noch für eine vorgebbare Zeitdauer sicher und zuverlässig anzusteuern bzw. offen zu halten. Auf diese Weise kann sichergestellt werden, dass die Spannung des Bootstrap-Kondensators niemals so weit absinkt, dass die Halbleiterschalter der H-Brücke nicht mehr sicher und zuverlässig angesteuert bzw. offen gehalten werden können. Vielmehr weist der Bootstrap-Kondensator bis zum erfolgreichen Nachladen auf jeden Fall eine ausreichend hohe Spannung auf. US 2009/0051300 A1 zeigt ein verfahren bzw. eine Schaltung gemäß dem Präambel von Anspruch 1 bzw. 6.

Weitere Merkmale und Vorteile der vorliegenden Erfindung werden nachfolgend anhand der Figuren näher erläutert. Dabei können die beschriebenen Merkmale jeweils einzeln oder in beliebiger Kombination miteinander die vorliegende Erfindung bilden. Es zeigen:
Figur 1 einen erfindungsgemäßen Kraftfahrzeugscheinwerfer gemäß einer bevorzugten Ausführungsform;
Figur 2 ein erfindungsgemäßes Lichtmodul gemäß einer bevorzugten Ausführungsform;
Figur 3 eine erfindungsgemäße Schaltung zur Realisierung eines erfindungsgemäßen Verfahrens gemäß einer ersten Ausführungsform;
Figur 4 verschiedene Signalverläufe, die während des Betriebs der Schaltung aus Figur 3 auftreten, über einen Zeitbereich von 0 bis 300 µs;
Figur 5 die Signalverläufe aus Figur 4 in einem Zeitbereich zwischen 0 und 6 µs;
Figur 6 eine erfindungsgemäße Schaltung zur Realisierung eines erfindungsgemäßen Verfahrens gemäß einer zweiten Ausführungsform;
Figur 7 verschiedene Signalverläufe, die während des Betriebs der Schaltung aus Figur 6 auftreten, über einen Zeitbereich von 0 bis 300 µs; und
Figur 8 die Signalverläufe aus Figur 7 in einem Zeitbereich zwischen 0 und 6 µs.

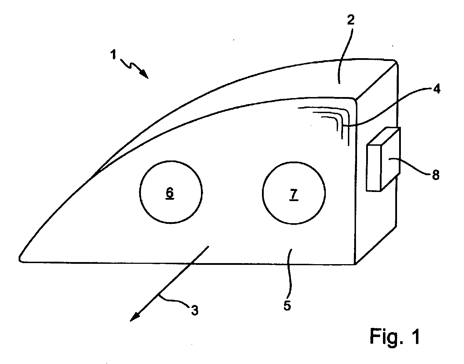

In Figur 1 ist eine erfindungsgemäßen Scheinwerfer in seiner Gesamtheit mit dem Bezugszeichen 1 bezeichnet. Der Scheinwerfer 1 umfasst ein Gehäuse 2, das vorzugsweise aus Kunststoff gefertigt ist. Der Scheinwerfer 1 wird in einer geeigneten Einbauöffnung an der Vorderseite einer Kraftfahrzeugkarosserie eingebaut und darin befestigt. Das Scheinwerfergehäuse 2 umfasst in einer Lichtaustritts-richtung 3 eine durch eine transparente Abdeckscheibe 4 verschlossene Lichtaustrittsöffnung 5. Die Abdeckscheibe 4 kann als eine sogenannte Streuscheibe mit optisch wirksamen Profilen (zum Beispiel Zylinderlinsen oder Prismen) oder als eine sogenannte klare Scheibe ohne optisch wirksame Profile ausgebildet sein. Im Inneren des Gehäuses 2 sind in dem dargestellten Ausführungsbeispiel zwei Lichtmodule 6, 7 angeordnet. Selbstverständlich können in dem Gehäuse 2 auch mehr oder weniger als die dargestellten zwei Lichtmodule 6, 7 angeordnet sein. Die Lichtmodule 6, 7 dienen zur Realisierung einer Scheinwerfer- oder Leuchtenfunktion. Die Lichtmodule 6, 7 in dem Scheinwerfergehäuse 2 können als Reflexionsmodule oder als Projektionsmodule ausgebildet sein. Zusätzlich zu den Lichtmodulen 6, 7 können noch weitere Module zur Erfüllung bestimmter Leuchtenfunktionen (zum Beispiel Blinklicht, Tagfahrlicht, Kurvenlicht, etc.) vorgesehen sein, die in Figur 1 jedoch nicht dargestellt sind. An einer Außenseite des Scheinwerfergehäuses 2 ist in dem dargestellten Ausführungsbeispiel ein Steuergerät 8 zur Steuerung des Scheinwerfers 1 und/oder einzelner Lichtmodule 6, 7 und/oder einzelner Bauteile der Lichtmodule 6, 7 angeordnet. Das Steuergerät 8 kann beispielsweise eine Ansteuerschaltung für eine Gasentladungslampe eines der Lichtmodule 6, 7 aufweisen. Selbstverständlich ist es denkbar, dass das Steuergerät 8 auch an einer beliebig anderen Stelle außerhalb oder innerhalb des Gehäuses 2 der Beleuchtungseinrichtung 1 angeordnet ist. Insbesondere wäre es denkbar, dass das Steuergerät 8 bzw. dessen Funktionalität integraler Bestandteil eines an der Rückseite einer Gasentladungslampe (bspw. einer Lampe vom Typ D5S) angeordneten Zündgeräts ist.

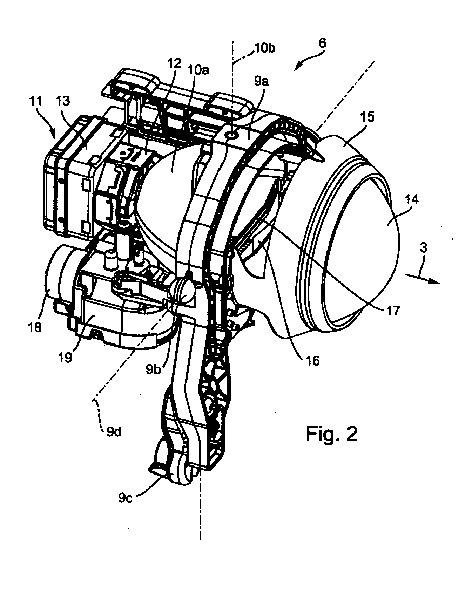

Nachfolgend wird anhand der Figur 2 eines der Lichtmodule 6, 7 beispielhaft näher erläutert. Figur 2 zeigt dabei ein als ein Projektionsmodul ausgebildetes Lichtmodul 6. Das andere Lichtmodul 7 kann genauso oder anders, bspw. als Reflexionsmodul, ausgebildet sein. Das Lichtmodul 6 umfasst einen äußeren Halterahmen 9a, der über zwei eine horizontale Drehachse definierende Lager 9b auf gegenüberliegenden Seiten des Halterahmens 9a um eine horizontale Achse 9d drehbar in dem Scheinwerfergehäuse 2 gelagert ist. Durch das Verschwenken des Lichtmoduls 6 um die horizontale Achse 9d kann eine Leuchtweite variiert werden (sog. Leuchtweitenregulierung, LWR). Zum Verstellen des Halterahmens 9a relativ zum Gehäuse 2 ist an einer Stelle 9c des Halterahmens 9a ein Betätigungselement, beispielsweise in Form eines Elektromagneten oder eines Elektromotors, angelenkt. Das Betätigungselement für die Leuchtweitenverstellung ist an dem Scheinwerfergehäuse 2 befestigt und ist in Figur 2 nicht gezeigt.

Im Inneren des Halterahmens 9a ist ein Reflektor 10 angeordnet. Der Reflektor 10a ist vorzugsweise um eine vertikale Drehachse 10b in horizontaler Richtung verschwenkbar in dem Halterahmen 9a gelagert. Durch Verschwenken des Reflektors 10a um die vertikale Achse 10b kann die Richtung des ausgesandten Lichtbündels in horizontaler Richtung variiert und insbesondere eine dynamische Kurvenlichtfunktion realisiert werden. An der Rückseite des Reflektors 10a ist eine Lichtquelle 11 angeordnet und über einen Reflektorhals 12 an dem Reflektor 10a befestigt. Die Lichtquelle 11 ist als eine Gasentladungslampe ausgebildet, insbesondere als eine Gasentladungslampe vom Typ D5S mit integriertem Zündgerät und integriertem Steuergerät. Sowohl das Zündgerät als auch das Steuergerät sind vorzugsweise in einem Gehäuse 13 aus Metall an der Rückseite der Lichtquelle 11 enthalten. Ein Glaskolben (nicht dargestellt) der Lichtquelle 11 ragt durch eine im Scheitel des Reflektors 10a ausgebildete Öffnung in das Innere des Reflektors 10a. In dem Glaskolben wird zwischen zwei Elektroden ein Lichtbogen gezündet und während des Betriebs der Gasentladungslampe 11 aufrechterhalten. Das durch den Lichtbogen emittierte Licht wird durch die Reflexionsfläche an der Innenseite des Reflektors 10a gebündelt und im Wesentlichen in Lichtaustrittsrichtung 3 reflektiert. Das von dem Reflektor 10a reflektierte Licht wird durch eine im Strahlengang angeordnete Projektionslinse 14 zur Erzeugung einer bestimmten Lichtverteilung auf die Fahrbahn vor das Kraftfahrzeug projiziert. Die Linse 14 ist mittels eines am vorderen Rand des Reflektors 10a befestigten Linsenhalters 15 im Strahlengang gehalten.

Zwischen dem Reflektor 10a und der Projektionslinse 14 ist eine Blendenanordnung 16 angeordnet, die einen Teil des von dem Reflektor 10a reflektierten Lichts abschattet. Eine Oberkante 17 der Blendenanordnung 16 wird zur Erzeugung einer im Wesentlichen horizontalen Helldunkelgrenze der Lichtverteilung durch die Projektionslinse 14 auf der Fahrbahn abgebildet. Die Position der Oberkante 17 der Blendenanordnung 16 sowie deren Verlauf sind vorzugsweise variabel. Durch Anheben oder Absenken der Oberkante 17 kann die Helldunkelgrenze der resultierenden Lichtverteilung angehoben beziehungsweise abgesenkt werden. Durch Variation des Verlaufs der Oberkante 17 kann der Verlauf der Helldunkelgrenze der Lichtverteilung variiert werden. Auf diese Weise kann das Lichtmodul 6 beispielsweise zwischen Abblendlicht und Fernlicht umgeschaltet werden. Des weiteren können auch verschiedene zwischen einer Abblendlichtverteilung und einer Fernlichtverteilung liegende weitere Lichtverteilungen realisiert werden, beispielsweise eine Stadtlichtverteilung, eine Landstraßenlichtverteilung, oder eine Autobahnlichtverteilung. Ferner kann durch Variation des Verlaufs der wirksamen Oberkante 17 der Blendenanordnung 16 beispielsweise die Funktion eines Teilfernlichts (entgegenkommende oder vorausfahrende Verkehrsteilnehmer werden gezielt aus einer Fernlichtverteilung ausgeblendet) oder eines Markierungslichts (Personen oder Gegenstände vor dem Fahrzeug werden gezielt mit einem Lichtbündel, das oberhalb der Helldunkelgrenze angeordnet ist, angestrahlt) realisiert werden.

Zur Realisierung der Verschwenkbewegung des Reflektors 10a um die vertikale Drehachse und zur Variation der Position und des Verlaufs der Oberkante 17 der Blendenanordnung 16 sind an der Unterseite des Lichtmoduls 6 zwei separate Betätigungselemente angeordnet, von denen lediglich eines, das Betätigungselement 18, in Figur 2 zu sehen ist. Die Betätigungselemente 18 sind außen an einen Getriebekasten 19 angeflanscht, der Umlenkgetriebe enthält. Die Betätigungselemente 18 sind vorzugsweise als Elektromotoren, insbesondere als Schrittmotoren ausgebildet. Die Umlenkgetriebe im Getriebekasten 19 setzen eine Drehbewegung der Motoren 18 um in eine im Wesentlichen lineare Betätigungsbewegung für die Verschwenkbewegung des Reflektors 10a um die Achse 10b sowie für die Variation der Position und/oder des Verlaufs der Oberkante 17 der Blendenanordnung 16.

Das Lichtmodul 6 mit der Gasentladungslampe 11 ist an sich für den Betrieb mit Wechselstrom ausgelegt. Im normalen Betrieb des Lichtmoduls 6 wird dieses deshalb auch mit Wechselstrom betrieben. Da jedoch die Gasentladungslampe 11 während des Betriebs relativ viel Wärme abgibt, kann es insbesondere bei relativ hohen Außentemperaturen und bei fehlender Kühlung (z.B. bei einem abrupten Stillstand des Fahrzeugs nach einer langen, zügigen Fahrt, die zu einer starken Erwärmung des Fahrzeugmotors und des gesamten Motorraums geführt hat), vorkommen, dass die Temperatur in der Umgebung des Lichtmoduls 6 der Beleuchtungseinrichtung 1 und/oder des Steuergerätes 8 über ein zulässiges Maß hinaus ansteigt, so dass ein sicherer und zuverlässiger Betrieb der Gasentladungslampe 11 nicht mehr gewährleistet werden kann. In einem solchen Fall muss die abgegebene Wärme durch Verringerung der Verlustleistung reduziert werden. Dies wird durch einen Betrieb der Gasentladungs-lampe 11 mit geringerer Leistung, insbesondere mit einem geringeren Strom erzielt. Aus diesem Grund sollten moderne Gasentladungslampen 11 so ausgelegt sein beziehungsweise derart angesteuert werden, dass sie auch über einen längeren Zeitraum hinweg gedimmt, also mit einem reduzierten Strom, betrieben werden können.

Durch den Betrieb der Gasentladungslampe 11 mit Wechselstrom kann unter anderem ein Überhitzen der Elektroden vermieden werden, zwischen denen der Lichtbogen gezündet und während des Betriebs der Lampe 11 aufrecht erhalten bleibt. Bei einer Verringerung des Wechselstroms würden die Elektroden jedoch abkühlen, wodurch deren Elektronenaustrittsarbeit ansteigen beziehungsweise die Emittierfähigkeit sinken würde. Aus diesem Grund sind im Wechselstrombetrieb betriebene Gasentladungslampen 11 nur bedingt dimmbar. Grundsätzlich gilt, dass je kleiner der Strom ist, desto mehr Wiederzündspannung muss für die Strom-Richtungsumkehr aufgebracht werden. Niedrige Ströme beziehungsweise Leistungen der Gasentladungslampe führen also zu Kommutierungsproblemen, die als Lichtflackern wahrnehmbar sind und sogar zum Erlöschen des Lichtbogens führen können. Bei Leistungsabregelung besteht bei manchen Gasentladungslampen neuerer Bauart die Möglichkeit, ab einer bestimmten unkritischen Elektrodentemperatur vom Wechselstrombetrieb in den Gleichstrombetrieb zu wechseln, ohne dabei die Lampe 11 zu beschädigen. Im Gleichstrom-betrieb sind erheblich geringere Leistungen möglich. Die Möglichkeit eines längeren Gleichstrombetriebs muss jedoch mit zusätzlichem Aufwand und Kosten erkauft werden.

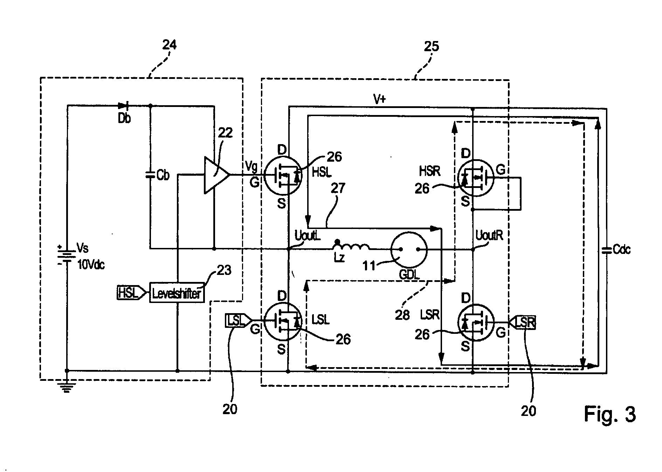

Für den Wechselstrombetrieb wird in der Regel eine H-Brückenschaltung (Bezugszeichen 25 in Figur 3) verwendet, die vier steuerbare Halbleiterschalter, beispielsweise in Form von Transistoren, umfasst, die in Figur 3 mit HSL, HSR, LSL, LSR bezeichnet sind. Zwischen Brückenzweigen (zwischen UoutL und UoutR) der H-Brückenschaltung 25 ist die Gasentladungslampe 11 (GDL) angeschlossen. Deren induktive Last aufgrund des Zünders ist mit Lz bezeichnet. Die H-Brückenschaltung 25 wandelt eine Zwischenkreis-Gleichspannung V+ in eine an dem Brückenzweig anliegende rechteckförmige Wechselspannung um. Je nach Ausführung der Halbleiterschalter HSL, HSR, LSL, LSR und deren Ansteuerelektronik ist es mit einem mehr oder weniger großen Aufwand möglich, einen dauerhaften Gleichstrombetrieb aufrechtzuerhalten.

Bei Verwendung eines n-Kanal-Mosfets beziehungsweise von IGBTs als Highside-Schalter (HSL bzw. HSR), bei denen das Drain mit der positiven Zwischenkreis-Spannung V+ verbunden ist, muss das Gate-Potential zur Ansteuerung mindestens um eine Schwellspannung Uth höher als das Source-Potential liegen. Die Zwischenkreis-Spannung V+ beträgt beispielsweise 500 V. Da Drain D und Source S im eingeschalteten (leitenden) Zustand auf fast gleichem Potential liegen, muss dem Gate G eine um mindestens die Schwellspannung Uth höhere Spannung Vg als die Zwischenkreis-Spannung V+ zur Verfügung gestellt werden. Dem Gate wird beispielsweise eine Spannung Vg = 510 V zur Verfügung gestellt.

Die Ansteuerung der Lowside-Schalter (LSL bzw. LSR) der H-Brückenschaltung 25 kann direkt über die angedeutete Ansteuerung 20 erfolgen. Die Ansteuerung der Highside-Schalter (HSL bzw. HSR) der H-Brückenschaltung 25 erfolgt in dem Beispiel aus Figur 3 über eine sogenannte Bootstrap-Schaltung 24. Die Schaltung 24 umfasst einen Gate-Treiber 22, der über einen Level-Shifter 23 angesteuert wird. Eine Spannungs-Versorgung des Gate-Treibers 22 besteht aus einem aufgeladenen Bootstrap-Kondensator Cb, dessen Fußpunkt im Source S des Highside-Schalters HSL (dies entspricht dem Drain D des Lowside-Schalters LSL und dem Ausgang UoutL der H-Brückenschaltung 25) und dessen Gegenpol über eine Hochspannungs-Bootstrap-Diode Db an einer Versorgungs-spannung Vs anliegt. Die Versorgungsspannung Vs beträgt beispielsweise 10 V. In Figur 3 ist lediglich eine Bootstrap-Schaltung 24 für den linken Highside-Schalter HSL eingezeichnet. Selbstverständlich kann alternativ oder zusätzlich eine entsprechende Bootstrap-Schaltung auch für den anderen Highside-Schalter HSR vorgesehen sein. Die in der vorliegenden Beschreibung vorstehend und nachfolgend gemachten Ausführungen zur Ansteuerung des Gates G des Highside-Schalters HSL über die Bootstrap-Schaltung 24 gelten in entsprechender Weise auch für die Ansteuerung des Gates G des anderen Highside-Schalters HSR über eine entsprechende Bootstrap-Schaltung.

Wenn im Wechselstrombetrieb der Lowside-Schalter LSL bzw. LSR angesteuert (geschlossen oder leitend) wird, liegt der Ausgang UoutL bzw. UoutR der H-Brückenschaltung 25 auf Masse und der Bootstrap-Kondensator Cb der für den entsprechenden Highside-Schalter HSL bzw. HSR vorgesehenen Bootstrap-Schaltung 24 kann sich über die Bootstrap-Diode Db dieser Schaltung 24 auf etwa den Wert der Versorgungs-spannung Vs aufladen. Wenn die H-Brücken-schaltung 25 umgeschaltet werden soll, wird der Lowside-Schalter LSL bzw. LSR abgeschaltet (geöffnet oder unterbrochen) und anschließend der Highside-Schalter HSL bzw. HSR angesteuert (leitend oder geschlossen). Dadurch wird die Ladung des Bootstrap-Kondensators Cb über den Gate-Treiber 22 zwischen Gate G und Source S des Highside-Schalters HSL bzw. HSR geschaltet, wodurch das Potential des Source S (entspricht dem Ausgang UoutL bzw. UoutR der H-Brückenschaltung 25) auf die Zwischenkreis-Spannung V+ springt. Damit wird die gesamte Bootstrap-Schaltung 24 im Potential auf die Zwischenkreis-Spannung V+ (bspw. 500 V) geshiftet und die Bootstrap-Diode Db sperrt, wobei die Gate-Spannung Vg des Highside-Schalters HSL bzw. HSR um die Bootstrap-Spannung (Potential des Bootstrap-Kondensators Cb) höher als die Zwischenkreis-Spannung V+ liegt.

Durch Leckströme (Versorgung des Gate-Treibers 22 + Sperrstrom der Diode Db + Sperrstrom des Levelshifters 23) entlädt sich der Bootstrap-Kondensator Cb, wobei durch Unterschreiten der Schwellspannung Uth der Highside-Schalter HSL bzw. HSR ungewollt und selbständig wieder abschaltet. Die maximale Zeit, in der der Highside-Schalter HSL bzw. HSR eingeschaltet bleiben kann, definiert sich also aus der Kapazität des Bootstrap-Kondensators Cb, den Leckströmen, der Versorgungsspannung Vs und der Schwellspannung Uth der Halbleiterschalter HSL, HSR, ist aber auf jeden Fall zeitlich begrenzt, wodurch die minimale Arbeitsfrequenz des Wechselstrombetriebs festgelegt ist. Um auch einen längeren, unbegrenzten Gleichstrombetrieb der Gasentladungslampe 11 zu ermöglichen, muss die von dem Bootstrap-Kondensator Cb abfließende Ladung nachgeführt werden, was mit der in Figur 3 gezeigten Schaltung einfach und schnell möglich ist.

Im Wechselstrombetrieb wird bei jedem Kommutierungsvorgang (Umschalten der H-Brückenschaltung 25) die Ausgangs-Spannung Uout der H-Brückenschaltung 25 auf die gleiche Größe (Zwischenkreis-Spannung V+), jedoch mit unterschiedlichem Vorzeichen umgepolt, indem die linke und die rechte Brückenseite jeweils von Masse nach der positiven Zwischenkreis-Spannung (+ V+) beziehungsweise von der positiven Zwischenkreis-Spannung (+ V+) nach Masse geschaltet wird. Dadurch sinkt der Lampenstrom I(Lz) aufgrund der Zünderinduktivität Lz einer e-Funktion entsprechend mit einer festen Zeitkonstante ab, erreicht einen Stromnulldurchgang, wechselt die Richtung und steigt wieder an.

In dem Moment, in dem die Halbleiterschalter HSL, HSR, LSL, LSR abgeschaltet (unterbrochen oder hochohmig) werden, treibt die Zünderinduktivität Lz den Lampenstrom in gleicher Richtung weiter, wodurch die Ausgangspotentiale der Brückenseiten selbständig kippen, indem die Ausgangskapazitäten aufgeladen beziehungsweise entladen werden, bis die den Halbleiterschaltern HSL, HSR, LSL, LSR parallel geschalteten Freilauf-Dioden 26 den Strom übernehmen. Die Brückenseite, die zunächst auf der positiven Zwischenkreis-Spannung V+ geschaltet war und deren Bootstrap-Kondensator Cb während dieser Phase durch Leckströme Ladung verloren hat, wird durch das Abschalten des Highside-Schalters HSL auf Masse kippen, wodurch dieser Bootstrap-Kondensator Cb über die Bootstrap-Diode Db wieder aufgeladen werden kann.

Die vorliegende Erfindung nutzt den Effekt, dass der Kondensator Cb zeitlich wieder geladen werden kann, bevor der Lampenstrom I(Lz) den Stromnulldurchgang erreicht hat, was bereits nach wenigen Mikrosekunden der Fall sein kann. Dieser Effekt ermöglicht also ein Nachladen des Kondensators Cb der Bootstrap-Schaltung 24 im Gleichstrombetrieb. Dabei wird der Lampenstrom I(Lz) nicht - wie im Wechselstrombetrieb üblich - nach Erreichen des Nulldurchgangs in umgepolter Richtung wieder eingeschaltet und komplett umgerichtet, sondern noch vor Erreichen des Nulldurchgangs in der ursprünglichen Richtung wieder eingeschaltet und ansteigen gelassen.

Gemäß der vorliegenden Erfindung werden im Gleichstrombetrieb der Schaltung von Zeit zu Zeit mindestens einer der geschlossenen Halbleiterschalter HSL, LSR bzw. HSR, LSL der H-Brückenschaltung 25 im Rahmen eines Nachladevorgangs kurzzeitig abgeschaltet (unterbrochen oder geöffnet), wobei der Nachladevorgang des mindestens einen Halbleiterschalters HSL, LSR beendet wird, noch bevor der über den Brückenzweig der H-Brückenschaltung 25 fließende Strom einen Wert von 0 Ampere erreicht. Der Nachladevorgang dauert vorteilhafterweise weniger als 5 µs, insbesondere 2µs, besonders bevorzugt 1µs. Der Abstand zwischen zwei aufeinanderfolgenden Nachladevorgängen, d.h. die Frequenz des Nachladens, wird so gewählt, dass die Ladung des Bootstrap-Kondensators Cb der Bootstrap-Schaltung 24 vor dem folgenden Nachladevorgang noch groß genug ist, um den mindestens einen geschlossenen Highside-Schalter HSL bzw. HSR der H-Brückenschaltung 25 sicher anzusteuern und im geschlossenen Zustand zu halten. Der Abstand zwischen zwei aufeinander-folgenden Nachladevorgängen wird vorteilhafterweise im Millisekundenbereich gewählt und beträgt insbesondere etwa 2,5 ms (Nachladefrequenz etwa 400 Hz).

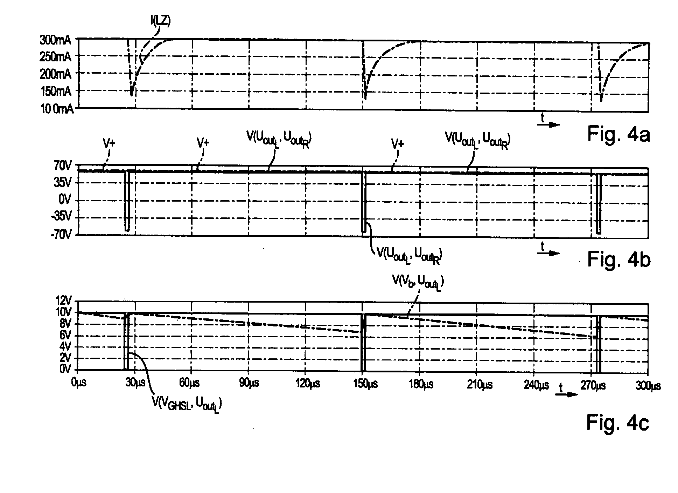

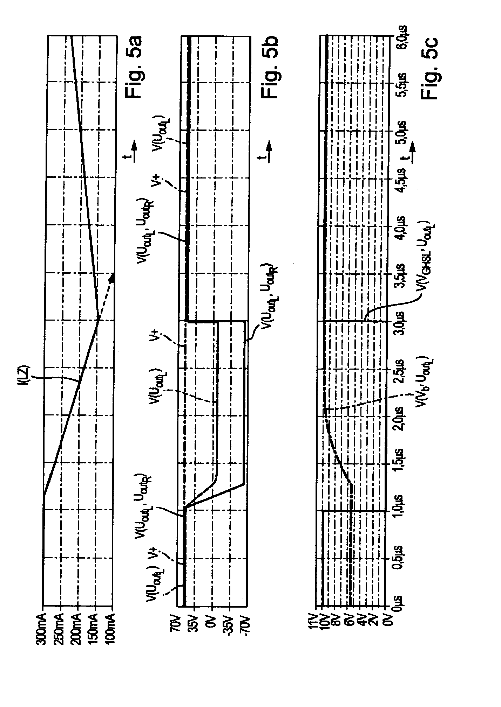

Figur 3 zeigt eine erfindungsgemäße Schaltung gemäß einer ersten Ausführungsform. Signalverläufe für diese Schaltung sind in Figur 4 und vergrößert in Figur 5 aufgetragen. Gemäß der ersten Ausführungsform der Figuren 3 bis 5 wird im Gleichstrombetrieb von Zeit zu Zeit sowohl ein als Highside-Schalter arbeitender geschlossener Halbleiterschalter HSL bzw. HSR der H-Brückenschaltung 25 als auch ein als Lowside-Schalter arbeitender geschlossener Halbleiterschalter LSR bzw. LSL der H-Brückenschaltung 25 kurzzeitig abgeschaltet. Es werden also beide, einen Laststrom 27 führende Halbleiterschalter HSL, LSR bzw. HSR, LSL abgeschaltet. Dadurch ist die H-Brückenschaltung 25 komplett abgeschaltet. Diese Funktion ist bei den meisten gängigen Treibern 22 mit der für die Erfindung erforderlichen Schnelligkeit realisierbar, so dass diese Ausführungsform mit gängigen Ansteuerschaltungen für Gasentladungslampen 11, insbesondere mit gängigen Bootstrap-Schaltungen 24 realisiert werden kann.

Durch das Abschalten der Halbleiterschalter HSL, LSR kippt diejenige Brückenseite selbständig auf Masse, auf deren Seite der zuvor betätigte Highside-Schalter angeordnet ist, in dem Beispiel aus Figur 3 die linke Brückenseite. Die andere Brückenseite kippt allerdings auch selbständig auf die Zwischenkreis-Spannung V+. Damit wird die Ausgangs-spannung Uout der H-Brückenschaltung 25 umgepolt. Der Strom fließt deshalb im Freilauf 28 durch die beiden gesperrten, vorher stromlosen Halbleiterschalter HSR, LSL auf den Ausgangskondensator Cdc der positiven Zwischenkreis-Spannung V+ und erhöht diese. In Figur 3 ist der Laststrom-kreislauf durch Pfeile veranschaulicht und mit dem Bezugszeichen 27 und der Freilaufstromkreislauf ebenfalls durch Pfeile veranschaulicht und mit dem Bezugszeichen 28 bezeichnet.

Bei dem Betrieb der Gasentladungslampe 11 im Gleichstrombetrieb wird der Freilaufstrom 28 durch die Zünder-Induktivität Lz durch die Lampenspannung selbst und darüber hinaus durch die Zwischenkreis-Spannung V+, die zunächst gleich groß ist, gebremst. Die Spannung V+ erhöht sich während dieser Phase aber sogar noch, da der Ausgangskondensator Cdc geladen wird. Der Lampenstrom I(Lz) würde sich in dieser Schaltungsart dem negativen Anfangswert annähern und damit nach einer gewissen Zeit den Stromnulldurchgang durchschreiten. Dies würde einer normalen Kommutierung im Wechselstrombetrieb entsprechen. Während der Zeit zwischen dem Beginn des Nachladevorgangs und vor Erreichen des Nulldurchgangs des Stroms wird der Bootstrap-Kondensator Cb nachgeladen. Diese Ausführungsform ist besonders vorteilhaft, wenn schnelle Bootstrap-Dioden Db (aufgrund des relativ kurzen Pulses) oder eine größere Zünder-Induktivität Lz vorhanden sind. Diese Variante kann mit jeder normalen Ansteuerschaltung realisiert werden, die schnell genug arbeitet.

In den Figuren 4a und 5a ist der Verlauf des Lampenstroms I(Lz) während des erfindungsgemäßen Gleichstrombetriebs dargestellt. Es ist zu erkennen, dass der Lampenstrom I(Lz) von dem ursprünglichen Wert von beispielsweise 300 mA zu Beginn des Nachladevorgangs, bspw. bei 1,0 µs, während der Dauer des Nachladevorgangs auf einen Wert von etwas weniger als 150 mA am Ende des Nachladevorgangs, bspw. bei 3,0 µs, absinkt. Nach dem Ende des Nachladevorgangs steigt der Lampenstrom I(Lz) dann wieder auf den ursprünglichen Wert von 300 mA an. In Figur 5a wird der Nachladevorgang deutlich vor Erreichen des Nulldurchgangs des Stroms I(Lz) beendet. Ohne ein rechtzeitiges Beenden des Nachladevorgangs, das heißt ohne rechtzeitiges Wiedereinschalten der Halbleiterschalter HSL, LSR würde der Strom - wie im herkömmlichen Wechselstrombetrieb üblich - den Nullpunkt erreichen und bei Einschalten der anderen Brückenrichtung HSR, LSL umkehren und Richtung -300 mA laufen. Dies ist in Figur 5a durch den gestrichelte Pfeil veranschaulicht.

Die Figuren 4b und 5b zeigen den Verlauf der Zwischenkreisspannung V+, der Ausgangsspannung UoutL der linken Seite der Brückenschaltung 25 und der Differenz-Brücken-Ausgangs-Spannung Uout = UoutL-UoutR der linken und rechten Brückenseite, also der zwischen den Brückenzweigen der Brückenschaltung 25 abfallenden Spannung. Der Verlauf des Potentials UoutL der linken Brückenseite ist durch eine gestrichelte Linie veranschaulicht, wohingegen der Verlauf des Potentials des Brückenausgangs Uout in Figur 5b mit einer durchgezogenen Linie veranschaulicht ist. Es ist zu erkennen, dass die linke Seite der H-Brückenschaltung 25 selbständig auf Masse (0 V) kippt (gestrichelte Linie) und dass die Ausgangsspannung der H-Brückenschaltung 25 auf den Wert der negativen Zwischenkreis-Spannung V+ (in diesem Beispiel auf -60 V) kippt. Die unterschiedlichen Verläufe der Potentiale an der linken Seite beziehungsweise am Ausgang der H-Brückenschaltung 25 während des Nachladevorgangs sind in Figur 5b deutlich zu erkennen. Während des reinen Gleichstrombetriebs, also außerhalb des Nachladevorgangs, sind die Potentialverläufe weitgehend deckungsgleich. In Figur 4b ist ein leichter Anstieg der Zwischenkreis-Spannung V+ (gestrichpunktete Linie) während des Nachladevorgangs zu erkennen. Dieser ist auf die Rückspeisung des Ausgangskondensators Cdc zurückzuführen. Der Ausgang Uout der H-Brückenschaltung 25 liegt während des Nachladevorgangs in dem dargestellten Beispiel auf dem negativen Wert der Zwischenkreis-Spannung V+, hier also auf -60 V. Der Verlauf der Zwischenkreis-Spannung V+ ist in den Figuren 4b und 5b durch eine gestrichpunktete Linie veranschaulicht. In den Diagrammen der Figuren 4 und 5 bedeutet die Spannungsangabe V(Ux, Uy) die Differenz-Spannung Ux - Uy der Knoten x und y, die Spannungsangabe V(UoutL, UoutR) bedeutet die Differenz-Spannung UoutL - UoutR, also Uout. Die Spannungsangabe V(UgHSL, UoutL) bedeutet die Differenz-Spannung UgHSL - UoutL = Ugate-Usource = Ugs(HSL).

Die Figuren 4c und 5c zeigen den Verlauf des Ansteuersignals für die Gate-Source-Spannung UgHSL - UoutL des Highside-Schalters HSL und damit den Beginn und das Ende des Abschaltvorganges. Das Gate-Ansteuersignal hat bei t = 1,0 µs eine fallende und bei t = 3,0 µs eine steigende Flanke. Außerdem zeigen die Figuren 4c, 5c den Verlauf der an dem Bootstrap-Kondensator Cb anliegenden Spannung Vb - UoutL und damit den Ladungszustand des Kondensators Cb. Das Ansteuersignal V(VGHSL-UoutL) für das Gate G des Highside-Schalters HSL ist mit einer durchgezogenen Linie veranschaulicht, während der Verlauf der an dem Kondensator Cb anliegenden Spannung V(Vb-UoutL) durch eine gestrichelte Linie veranschaulicht ist. Es ist anhand der Figur 4c deutlich zu erkennen, dass die Ladung des Bootstrap-Kondensators Cb während des normalen Gleichstrombetriebs, das heißt außerhalb des Nachladevorgangs, aufgrund der Leckströme kontinuierlich abnimmt. Ferner ist deutlich zu erkennen, dass die Ladung während des Nachladevorgangs innerhalb kürzester Zeit wieder auf ihren ursprünglichen Wert angehoben wird.

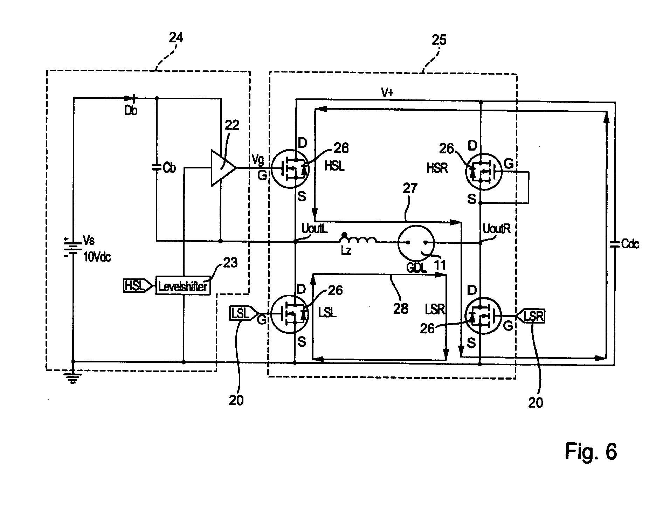

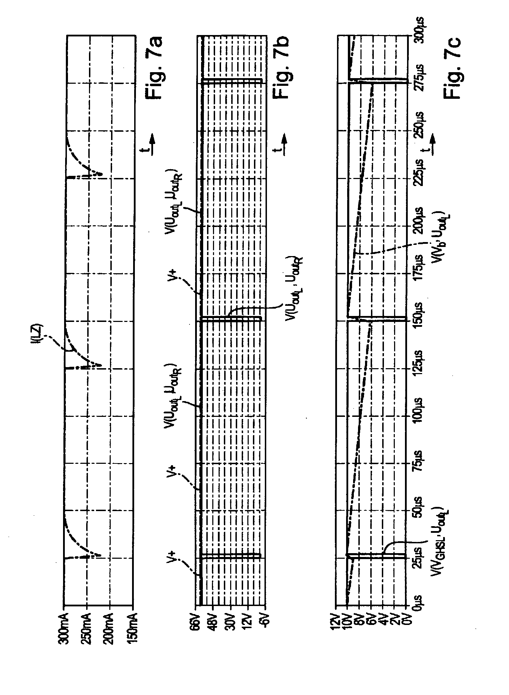

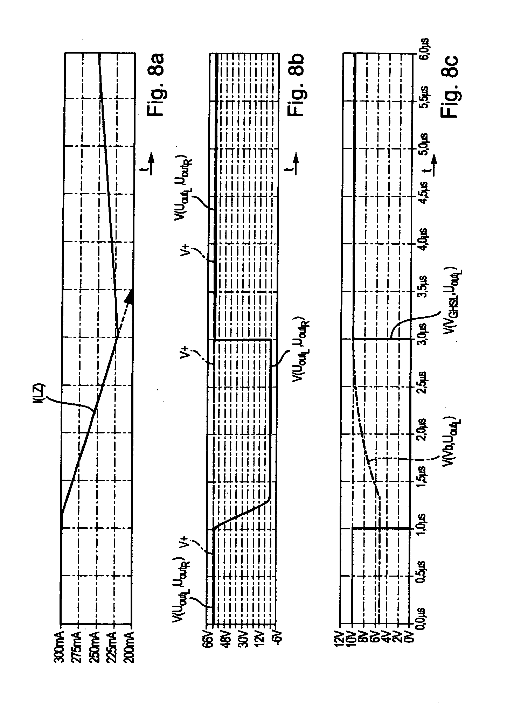

Eine weitere Ansteuerschaltung zur Realisierung der vorliegenden Erfindung gemäß einer bevorzugten Ausführungsform ist in Figur 6 gezeigt. Die entsprechenden Signalverläufe sind in Figur 7 und vergrößert in Figur 8 aufgetragen. Gemäß dieser Ausführungsform wird im Gleichstrombetrieb von Zeit zu Zeit lediglich der als Highside-Schalter arbeitende ursprünglich geschlossene Halbleiterschalter HSL der H-Brückenschaltung 25 kurzzeitig umgeschaltet. Es wird also nur der leitende Highside-Schalter abgeschaltet (geöffnet oder unterbrochen). Das ist der linke Highside-Schalter HSL bei einem Stromfluss von links oben nach rechts unten (vergleiche Figur 6, Laststrom 27). Das ist der rechte Highside-Schalter HSR bei einem Stromfluss von rechts oben nach links unten (in Figur 6 nicht dargestellt). Der Lowside-Schalter LSR bzw. LSL dieser Brückenseite muss nicht, kann aber eingeschaltet werden. Die andere Brückenseite ist und bleibt auf Masse, so dass der Lowside-Schalter LSL bzw. LSR eingeschaltet bleibt. Damit kippt nur die Brückenseite selbständig auf Masse, deren Bootstrap-Kondensator Cb geladen werden soll. Die Ausgangsspannung Uout der H-Brückenschaltung 25 beträgt damit 0 V. Dadurch fließt Strom im Freilauf 28 nur durch die beiden unteren Lowside-Schalter LSL, LSR. Der durch die Zünder-Induktivität Lz und damit über den Brückenzweig der H-Brückenschaltung 25 fließende Strom wird nur durch die Lampenspannung selbst gebremst. Der Strom I(Lz) würde sich in dieser Schaltungsart relativ langsam gemäß einer e-Funktion dem Nulldurchgang (0 Ampere) nähern, ohne jedoch den Stromnulldurchgang zu durchschreiten. Dadurch bleibt bei dieser Ausführungsform deutlich mehr Zeit zum Nachladen des Bootstrap-Kondensators Cb bis der Lampenstrom so klein ist, dass der Lichtbogen in der Gasentladungslampe 11 erlöschen würde, als bei der ersten Ausführungsform der Figuren 3 bis 5. Die zweite Ausführungsform setzt die Möglichkeit voraus, die Highside-Schalter HSL bzw. HSR einzeln ansteuern zu können, was bei manchen heute am Markt erhältlichen H-Brückentreibern 22 bzw. Bootstrap-Schaltungen 24 noch nicht vorgesehen ist.

Die in den Figuren 7 und 8 gezeigten Signalverläufe wurden für die gleichen Größen aufgezeichnet wie in den Figuren 4 und 5 für die erste Ausführungsform. Es ist deutlich zu erkennen, dass bei der zweiten Ausführungsform der Nachladevorgang zwar ebenfalls zwischen 1 µs bis 3 µs aktiv ist, also insgesamt 2 µs dauert. Allerdings fällt der Lampenstrom I(Lz) deutlich langsamer ab (vergleiche Figur 8a) als bei der ersten Ausführungsform (vergleiche Figur 5a), da der Lampenstrom I(Lz) am Ende des Abschaltvorgangs lediglich auf etwas weniger als 225 mA gefallen ist. Figur 8b zeigt, dass bei Beginn des Abschaltvorgangs die linke Seite der H-Brückenschaltung 25 selbständig auf Masse kippt. Gegen Ende des Nachladevorgangs liegt der Ausgang Uout der H-Brückenschaltung 25 auf Masse. Das Ein- und Ausschalten des Nachladevorgangs sowie der Vorgang des Aufladens des Bootstrap-Kondensators Cb gemäß den Figuren 7c und 8c entspricht im Wesentlichen dem Ein- und Ausschalten des Nachladevorganges sowie dem Aufladevorgang des Kondensators Cb gemäß der ersten Ausführungsform (vergleiche die Figuren 4c und 5c).

Für Gasentladungslampen 11 liegt die Dauer des Nachladevorgangs im Bereich weniger Mikrosekunden, während die reinen Gleichstromphasen zwischen den Nachladevorgängen im Millisekunden-Bereich liegen. Das heißt, die Wiederholrate der Nachladepulse kann bei gleicher Frequenz, wie der eigentliche Wechselstrombetrieb, also im Bereich um die 400 Hz, liegen. Der kurzzeitige Einbruch des Stroms I(Lz) während der Nachladepulse (vergleiche Figuren 4a und 7a) ist dabei im von dem Lichtmodul ausgesandten Licht für das menschliche Auge nicht sichtbar. Obwohl gemäß der vorliegenden Erfindung während des Gleichstrombetriebs immer wieder kurzzeitig ein Nachladevorgang ausgeführt wird, kann bei der vorliegenden Erfindung dennoch davon gesprochen werden, dass die Gasentladungslampe 11 im Gleichstrombetrieb und nicht etwa in einem Wechselstrombetrieb betrieben wird. Entscheidend ist, dass bei der vorliegenden Erfindung im Gleichstrombetrieb keine Kommutierung (Richtungsänderung) des Stroms erfolgt, wie dies bei einem Wechselstrombetrieb der Fall ist.

Die kurzen Nachladezeiten im Bereich von wenigen Mikrosekunden bedeuten, dass der den Nachladevorgang steuernde Mikrokontroller in der Lage sein muss, sehr kurze Steuerimpulse im Mikrosekundenbereich ausgeben zu können.

Bei der ersten Ausführungsform der vorliegenden Erfindung konnte eine 25W-Gasentladungslampe im Gleichstrombetrieb bis unter 15W abgedimmt werden. Die zweite Ausführungsform beziehungsweise die dafür vorgesehenen schnellen Treiber 22 und die gesonderte Ansteuermöglichkeit einzelner Halbleiterschalter könnte in einem neu zu entwickelnden H-Brücken-Baustein integriert werden. Dann wäre bei einer 25W-Lampe eine Abregelung der Leistung bis unter 10W denkbar.

Die vorliegende Erfindung kann bei all denjenigen Gasentladungslampen eingesetzt werden, bei denen der Gleichstrombetrieb zur Leistungsreduzierung vorgesehen ist. Dies wird insbesondere bei einer derzeit in der Entwicklung befindlichen 25W Gasentladungslampe vom Typ D5 der Fall sein. Die 25W Gasentladungslampe mit integriertem Zündgerät und integriertem Steuergerät läuft derzeit unter der Bezeichnung "D5S". Des weiteren ist es mit der vorliegenden Erfindung möglich, bei beliebigen Typen von Gasentladungs-lampen die ersten beiden notwendigen längeren Gleichstrom-phasen, die nach der Zündung des Lichtbogens zum Aufheizen der Elektroden benötigt werden, zu verlängern bzw. mit sehr kleinen Bootstrap-Kondensatoren Cb durchzuführen, das heißt diese von der Bauform/Kapazität her zu reduzieren. Selbstverständlich können mit der vorliegenden Erfindung aber auch andere induktive Lasten, wie beispielsweise Elektromotoren oder Elektromagnete, die schaltend geregelt werden sollen und für die dann der Einsatz von Bootstrap-H-Brückenschaltungen denkbar ist, mit Gleichstrom betrieben werden.

## Patentansprüche

1. Verfahren zum Betreiben einer an sich für den Betrieb mit einem Wechselstrom vorgesehenen Lichtquelle (11) eines Kraftfahrzeugscheinwerfers (1) mit einem Gleichstrom,
- wobei die Lichtquelle (11)
- eine induktive Last (Lz) aufweist,
- zwischen Brückenzweigen einer elektrischen H-Brückenschaltung (25) mit vier Halbleiterschaltern (HSL, HSR, LSL, LSR) angeordnet ist,
- und im Wechselstrombetrieb über die H-Brückenschaltung (25) mit dem Wechselstrom beaufschlagt wird,
- und im Gleichstrombetrieb über die H-Brückenschaltung (25) mit dem Gleichstrom beaufschlagt wird.
- wobei die beiden Highside-Halbleiterschalter (HSL, HSR) der H-Brückenschaltung (25) jeweils über eine Bootstrap-Schaltung (24) mit je einem Bootstrap-Kondensator (Cb) angesteuert werden,
**dadurch gekennzeichnet,**
- **dass** im Gleichstrombetrieb von Zeit zu Zeit mindestens eine geschlossenener Highside-Halbleiterschalter (HSL, LSR; HSR, LSL) der H-Brückenschaltung (25) für einen Nachladevorgang seines Bootstrap-Kondensators kurzzeitig ab- und am Ende des Nachladevorgangs wieder eingeschaltet wird,
- wobei der Nachladevorgang beendet wird, bevor der über den Brückenzweig der H-Brückenschaltung fließende Strom (I(Lz)) einen Wert von 0 Ampere erreicht.
- wobei der Abstand zwischen zwei aufeinander folgenden Nachladevorgängen so gewählt wird, dass die Ladung des Bootstrap-Kondensators (Cb) der Bootstrap-Schaltung (24) vor dem folgenden Nachladevorgang noch groß genug ist, um den mindestens einen geschlossenen Halbleiterschalter (HSL; HSR) der H-Brückenschaltung (25) sicher anzusteuern.

2. Verfahren nach Anspruch 1, **dadurch gekennzeichnet, dass** der Nachladevorgang weniger als 5 Mikrosekunden, insbesondere 2 Mikrosekunden, besonders bevorzugt 1 Mikrosekunde dauert.

3. Verfahren nach Anspruch 1, **dadurch gekennzeichnet, dass** der Abstand zwischen zwei aufeinander folgenden Nachladevorgängen im Millisekundenbereich gewählt wird, insbesondere etwa 2,5 Millisekunden beträgt.

4. Verfahren nach einem der Ansprüche 1 bis 3, **dadurch gekennzeichnet, dass** im Gleichstrombetrieb für den Nachladevorgang von Zeit zu Zeit sowohl ein als Highside-Schalter arbeitender geschlossener Halbleiterschalter (HSL; HSR) der H-Brückenschaltung (25) als auch ein als Lowside-Schalter arbeitender geschlossener Halbleiterschalter (LSR; LSL) der H-Brückenschaltung (25) kurzzeitig abgeschaltet wird.

5. Verfahren nach einem der Ansprüche 1 bis 3, **dadurch gekennzeichnet, dass** im Gleichstrombetrieb für den Nachladevorgang von Zeit zu Zeit lediglich ein als Highside-Schalter arbeitender geschlossener Halbleiterschalter (HSL; HSR) der H-Brückenschaltung (25) kurzzeitig abgeschaltet wird.

6. Elektrische Schaltung zum Betreiben einer an sich für den Betrieb mit einem Wechselstrom vorgesehenen Lichtquelle (11) eines Kraftfahrzeugscheinwerfers (1) mit einem Gleichstrom, wobei die Lichtquelle (11) eine induktive Last (Lz) aufweist, die Schaltung umfassend:
- eine elektrische H-Brückenschaltung (25) mit vier Halbleiterschaltern (HSL, HSR, LSL, LSR) zum Beaufschlagen der Lichtquelle (11) im Wechselstrombetrieb mit dem Wechselstrom und im Gleichstrombetrieb mit dem Gleichstrom, wobei die Lichtquelle (11) zwischen Brückenzweigen der H-Brückenschaltung (25) angeordnet ist, und
- Bootstrap-Schaltungen (24) mit je einem Bootstrap-Kondensator (Cb), die Bootstrap-Schaltungen (24) jeweils zum Ansteuern von einem der Highside-Halbleiterschalter (HSL, HSR) der H-Brückenschaltung (25),
**dadurch gekennzeichnet,**
- **dass** die Schaltung Mittel zum gelegentlichen Nachladen des Bootstrap-Kondensators (Cb) durch kurzzeitiges Abschalten und wieder Einschalten mindestens eines geschlossenen Highside-Halbleiterschalters (HSL, LSR; HSR, LSL) der H-Brückenschaltung (25) im Gleichstrombetrieb aufweist,
- wobei eine Dauer des Nachladevorgangs derart vorgegeben ist, dass der Nachladevorgang beendet ist bevor der über den Brückenzweig der H-Brückenschaltung (25) fließende Strom (I(Lz)) einen Wert von 0 Ampere errecht.
- wobei der Abstand zwischen zwei aufeinander folgenden Nachladevorgängen so gewählt ist, dass die Ladung des Bootstrap-Kondensators (Cb) der Bootstrap-Schaltung (24) vor dem folgenden Nachladevorgang noch groß genug ist, um den mindestens einen geschlossenen Halbleiterschalter (HSL; HSR) der H-Brückenschaltung (25) sicher anzusteuern.

7. Schaltung nach Anspruch 6, **dadurch gekennzeichnet, dass** die Dauer des Nachladevorgangs weniger als 5 Mikrosekunden, insbesondere etwa 2 Mikrosekunden, besonders bevorzugt etwa 1 Mikrosekunde beträgt.

8. Schaltung nach Anspruch 6, **dadurch gekennzeichnet, dass** der Abstand zwischen zwei aufeinander folgenden Nachladevorgängen im Millisekundenbereich gewählt ist, insbesondere etwa 2,5 Millisekunden beträgt.

9. Schaltung nach einem der Ansprüche 6 bis 8, **dadurch gekennzeichnet, dass** die Mittel im Gleichstrombetrieb von Zeit zu Zeit sowohl einen als Highside-Schalter arbeitenden geschlossenen Halbleiterschalter (HSL; HSR) der H-Brückenschaltung (25) als auch einen als Lowside-Schalter arbeitenden geschlossenen Halbleiterschalter (LSR; LSL) der H-Brückenschaltung (25) kurzzeitig umschalten.

10. Schaltung nach einem der Ansprüche 6 bis 8, **dadurch gekennzeichnet, dass** die Mittel im Gleichstrombetrieb von Zeit zu Zeit lediglich einen als Highside-Schalter arbeitenden geschlossenen Halbleiterschalter (HSL; HSR) der H-Brückenschaltung (25) kurzzeitig umschalten.

11. Lichtmodul (6; 7) eines Kraftfahrzeugscheinwerfers (1), das Lichtmodul (6; 7) umfassend eine Lichtquelle (11) mit induktiver Last (Lz) sowie eine Schaltung zum Betrieb der Lichtquelle (11), **dadurch gekennzeichnet, dass** die Schaltung nach einem der Ansprüche 6 bis 10 ausgebildet ist.

12. Lichtmodul (6; 7) nach Anspruch 11, **dadurch gekennzeichnet, dass** die Schaltung Teil eines Steuergeräts (8) der Lichtquelle (11) ist.

13. Lichtmodul (6; 7) nach Anspruch 11, oder 12, **dadurch gekennzeichnet, dass** die Lichtquelle (11) als eine Gasentladungslampe, insbesondere als eine 25 Watt Gasentladungslampe mit integriertem Zündgerät und integriertem Steuergerät vom Typ D5, ausgebildet ist.

14. Kraftfahrzeugscheinwerfer (1) umfassend ein Gehäuse (2) mit einer durch eine transparente Abdeckscheibe (4) verschlossenen Lichtaustrittsöffnung (5) sowie mindestens ein in dem Gehäuse (2) angeordnetes Lichtmodul (6; 7), **dadurch gekennzeichnet, dass** das mindestens eine Lichtmodul (6; 7) nach einem der Ansprüche 11 bis 13 ausgebildet ist.

## Claims

1. A method for operating a light source (11), provided per se for operation by alternating current, of a direct-current motor vehicle headlight (1),
- wherein the light source (11)
- has an inductive load (Lz),
- is located between bridge branches of an electrical H bridge circuit (25) having four semiconductor switches (HSL, HSR, LSL, LSR),
- and in the alternating-current mode is subjected to the alternating current via the H bridge circuit (25),
- and in the direct-current mode is subjected to the direct current via the H bridge circuit (25),
- and the two highside semiconductor switches (HSL, HSR) of the H bridge circuit (25) are each triggered via a bootstrap circuit (24), each with one bootstrap capacitor (Cb),
**characterized in that**
- in the direct-current mode from time to time at least one closed highside semiconductor switch (HSL, LSR; HSR, LSL) of the H bridge circuit (25), for a recharging procedure of its bootstrap capacitor, is briefly switched off and at the end of the recharging procedure switched back on again,
- and the recharging procedure is terminated before the current (I(Lz)) flowing via the bridge branch of the H bridge circuit attains a value of 0 amperes,
- and the interval between two successive recharging procedures is selected such that before the next recharging procedure, the charge of the bootstrap capacitor (Cb) of the bootstrap circuit (24) is still high enough for reliably triggering the at least one closed semiconductor switch (HSL; HSR) of the H bridge circuit (25).

2. The method of claim 1, **characterized in that** the recharging procedure lasts less than 5 microseconds, in particular 2 microseconds, and especially preferably 1 microsecond.

3. The method of claim 1, **characterized in that** the interval between two successive recharging procedures in selected in the millisecond range and in particular amounts to approximately 2.5 milliseconds.

4. The method of one of claims 1-3, **characterized in that** in the direct-current mode, for the recharging procedure, from time to time both a closed semiconductor switch (HSL; HSR), operating as a highside switch, of the H bridge circuit (25) and a closed semiconductor switch (LSR; LSL), operating as a lowside switch, of the H bridge circuit (25) are briefly switched off.

5. The method of one of claims 1-3, **characterized in that** in the direct-current mode, for the recharging procedure, from time to time only one closed semiconductor switch (HSL; HSR), operating as a highside switch, of the H bridge circuit (25) is briefly switched off.

6. An electrical circuit for operating a light source (11), provided per se for operation by alternating current, of a direct-current motor vehicle headlight (1), in which the light source (11) has an inductive load (Lz), the circuit including:
- an electrical H bridge circuit (25) having four semiconductor switches (HSL, HSR, LSL, LSR) for subjecting the light source (11) to the alternating current in the alternating-current mode and to the direct current in the direct-current mode, the light source (11) being located between bridge branches of the H bridge circuit (25), and
- bootstrap circuits (24), each with one bootstrap capacitor (Cb), the bootstrap circuits (24) each being for triggering one of the highside semiconductor switches (HSL, HSR) of the H bridge circuit (25),
**characterized in that**
- the circuit has means for occasionally recharging the bootstrap capacitor (Cb) by briefly switching off at least one highside semiconductor switch (HSL, LSR; HSR, LSL) of the H bridge circuit (25) and switching it back on again in the direct-current mode;
- and a duration of the recharging procedure is predetermined such that the recharging procedure is terminated before the current (I(Lz)) flowing via the bridge branch of the H bridge circuit (25) attains a value of 0 amperes,
- and the interval between two successive recharging procedures is selected such that before the ensuing recharging procedure, the charging of the bootstrap capacitor (Cb) of the bootstrap circuit (24) is still high enough for reliably triggering the at least one closed semiconductor switch (HSL; HSR) of the H bridge circuit (25).

7. The circuit of claim 6, **characterized in that** the duration of the recharging procedure is less than 5 microseconds, in particular approximately 2 microseconds, and especially preferably 1 microsecond.

8. The circuit of claim 6, **characterized in that** the interval between two successive recharging procedures in selected in the millisecond range and in particular amounts to approximately 2.5 milliseconds.

9. The circuit of claim 6-8, **characterized in that** in the direct-current mode, for the recharging procedure, the means from time to time briefly switch over both a closed semiconductor switch (HSL; HSR), operating as a highside switch, of the H bridge circuit (25) and a closed semiconductor switch (LSR; LSL), operating as a lowside switch, of the H bridge circuit (25).

10. The circuit of one of claims 6-8, **characterized in that** in the direct-current mode, the means from time to time briefly switch over only one closed semiconductor switch (HSL; HSR), operating as a highside switch, of the H bridge circuit (25).

11. A light module (6; 7) of a motor vehicle headlight (1), the light module (6; 7) including both a light source (11) with an inductive load (Lz) and a circuit for operating the light source (11), **characterized in that** the circuit is embodied in accordance with one of claims 6-10.

12. The light module (6; 7) of claim 11, **characterized in that** the circuit is part of a control unit (8) of the light source (11).

13. The light module (6; 7) of claim 11 or 12, **characterized in that** the light source (11) is embodied as a gas discharge lamp, in particular as a 25-watt gas discharge lamp with an integrated ignition set and an integrated type D5 control unit.

14. A motor vehicle headlight (1) including both a housing (2), the housing having a light exit opening (5) sealed with a transparent cover plate (4), and at least one light module (6; 7) located in the housing (2), **characterized in that** the at least one light module (6; 7) is embodied in accordance with one of claims 11-13.

## Revendications

1. Procédé pour faire fonctionner avec un courant continu une source de lumière (11) d'un bloc optique de véhicule automobile (1) prévue en elle-même pour fonctionner avec un courant alternatif,
- procédé selon lequel la source de lumière (11)
- présente une charge inductive (Lz),
- est disposée entre les branches de pont d'un circuit en pont en H (25) électrique comprenant quatre commutateurs à semiconducteur (HSL, HSR, LSL, LSR),
- et, en régime à courant alternatif, est alimentée en courant alternatif par le biais du circuit en pont en H (25),
- et, en régime à courant continu, est alimentée en courant continu par le biais du circuit en pont en H (25),
- procédé selon lequel les deux commutateurs à semiconducteur côté haut (HSL, HSR) du circuit en pont en H (25) sont respectivement commandés par un circuit d'amorçage (24) à chaque fois doté d'un condensateur d'amorçage (Cb),
**caractérisé en ce**
- **qu'**en régime à courant continu, au moins un commutateur à semiconducteur côté haut (HSL, LSR; HSR, LSL) fermé du circuit en pont en H (25) est, de temps en temps, déconnecté pendant une courte durée pour une opération de recharge de son condensateur d'amorçage, puis de nouveau connecté à la fin de l'opération de recharge,
- l'opération de recharge prenant fin avant que le courant (I(Lz)) qui circule sur la branche de pont du circuit en pont en H n'atteigne une valeur de 0 ampère,
- l'écart entre deux opérations de recharge successives étant choisi de telle sorte que la charge du condensateur d'amorçage (Cb) du circuit d'amorçage (24) avant l'opération de recharge suivante est encore suffisamment grande pour pouvoir commander avec certitude l'au moins un commutateur à semiconducteur (HSL; HSR) fermé du circuit en pont en H (25).

2. Procédé selon la revendication 1, **caractérisé en ce que** l'opération de recharge dure moins de 5 microsecondes, notamment 2 microsecondes, plus préférablement 1 microseconde.

3. Procédé selon la revendication 1, **caractérisé en ce que** l'écart entre deux opérations de recharge successives est choisi dans la gamme des millisecondes, notamment est égal à environ 2,5 millisecondes.

4. Procédé selon l'une des revendications 1 à 3, **caractérisé en ce qu'**en régime à courant continu, à la fois un commutateur à semiconducteur (HSL; HSR) fermé du circuit en pont en H (25) qui fonctionne en tant que commutateur côté haut et un commutateur à semiconducteur (LSR; LSL) fermé du circuit en pont en H (25) qui fonctionne en tant que commutateur côté bas sont déconnectés de temps en temps pendant une courte durée pour l'opération de recharge.

5. Procédé selon l'une des revendications 1 à 3, **caractérisé en ce qu'**en régime à courant continu, seul un commutateur à semiconducteur (HSL; HSR) fermé du circuit en pont en H (25) qui fonctionne en tant que commutateur côté haut est déconnecté de temps en temps pendant une courte durée pour l'opération de recharge.

6. Circuit électrique pour faire fonctionner avec un courant continu une source de lumière (11) d'un bloc optique de véhicule automobile (1) prévue en elle-même pour fonctionner avec un courant alternatif, la source de lumière (11) présentant une charge inductive (Lz), le circuit comprenant:
- un circuit en pont en H (25) électrique comprenant quatre commutateurs à semiconducteur (HSL, HSR, LSL, LSR) pour alimenter la source de lumière (11), en régime à courant alternatif, avec le courant alternatif et, en régime à courant continu, avec le courant continu, la source de lumière (11) étant disposée entre les branches de pont du circuit en pont en H (25), et
- des circuits d'amorçage (24) respectivement dotés d'un condensateur d'amorçage (Cb), les circuits d'amorçage (24) étant respectivement prévus pour commander l'un des commutateurs à semiconducteur côté haut (HSL, HSR) du circuit en pont en H (25),
**caractérisé en ce**
- **que** le circuit présente des moyens pour recharger occasionnellement le condensateur d'amorçage (Cb) par une brève déconnexion puis une reconnexion d'au moins un commutateur à semiconducteur côté haut (HSL, LSR; HSR, LSL) fermé du circuit en pont en H (25) en régime à courant continu,
- une durée de l'opération de recharge étant prédéfinie de telle sorte que l'opération de recharge prend fin avant que le courant (I(Lz)) qui circule sur la branche de pont du circuit en pont en H (25) n'atteigne une valeur de 0 ampère,
- l'écart entre deux opérations de recharge successives étant choisi de telle sorte que la charge du condensateur d'amorçage (Cb) du circuit d'amorçage (24) avant l'opération de recharge suivante est encore suffisamment grande pour pouvoir commander avec certitude l'au moins un commutateur à semiconducteur (HSL; HSR) fermé du circuit en pont en H (25).

7. Circuit selon la revendication 6, **caractérisé en ce que** l'opération de recharge dure moins de 5 microsecondes, notamment environ 2 microsecondes, particulièrement préférablement environ 1 microseconde.

8. Circuit selon la revendication 6, **caractérisé en ce que** l'écart entre deux opérations de recharge successives est choisi dans la gamme des millisecondes, notamment égal à environ 2,5 millisecondes.

9. Circuit selon l'une des revendications 6 à 8, **caractérisé en ce qu'**en régime à courant continu, les moyens permutent de temps en temps pendant une courte durée à la fois un commutateur à semiconducteur (HSL ; HSR) fermé du circuit en pont en H (25) qui fonctionne en tant que commutateur côté haut et un commutateur à semiconducteur (LSR ; LSL) fermé du circuit en pont en H (25) qui fonctionne en tant que commutateur côté bas.

10. Circuit selon l'une des revendications 6 à 8, **caractérisé en ce qu'**en régime à courant continu, les moyens permutent de temps en temps pendant une courte durée seulement un commutateur à semiconducteur (HSL; HSR) fermé du circuit en pont en H (25) qui fonctionne en tant que commutateur côté haut.

11. Module d'éclairage (6; 7) d'un bloc optique de véhicule automobile (1), le module d'éclairage (6; 7) comprenant une source de lumière (11) ayant une charge inductive (Lz) ainsi qu'un circuit pour faire fonctionner la source de lumière (11), **caractérisé en ce que** le circuit est configuré selon l'une des revendications 6 à 10.

12. Module d'éclairage (6; 7) selon la revendication 11, **caractérisé en ce que** le circuit fait partie d'un contrôleur (8) de la source de lumière (11).

13. Module d'éclairage (6; 7) selon la revendication 11 ou 12, **caractérisé en ce que** la source de lumière (11) est réalisée sous la forme d'une lampe à décharge de gaz, notamment une lampe à décharge de gaz de 25 W avec dispositif d'amorçage intégré et contrôleur intégré de type D5.

14. Bloc optique de véhicule automobile (1) comprenant un boîtier (2) muni d'une ouverture de sortie de lumière (5) fermée par une plaque de protection (4) transparente ainsi qu'au moins un module d'éclairage (6; 7) disposé dans le boîtier (2), **caractérisé en ce que** l'au moins un module d'éclairage (6; 7) est configuré selon l'une des revendications 11 à 13.
